# EUROPÄISCHE PATENTSCHRIFT

(11) **EP 0 887 377 B1**
(45) Veröffentlichungstag und Bekanntmachung des Hinweises auf die Patenterteilung: **11.04.2001**
(21) Anmeldenummer: 98109143.2
(22) Anmeldetag: 20.05.1998
(51) Int. Cl.: C08K 9/08, C08L 21/00, C08J 3/22

(54) **Kautschukmischung**
Rubber composition
Composition de caoutchouc

(30) Priorität: 24.06.1997 DE 19726729
(43) Veröffentlichungstag der Anmeldung: 30.12.1998
(73) Patentinhaber: Continental Aktiengesellschaft, 30165 Hannover (DE)
(72) Erfinder: Heinrich, Gert, Dr., 30163 Hannover (DE); Recker, Carla, Dr., 30167 Hannover (DE)

(56) Entgegenhaltungen:
- US-A- 5 486 560
- DATABASE WPI Section Ch, Week 9602 Derwent Publications Ltd., London, GB; Class A26, AN 96-017210 XP002079722 & JP 07 291981 A (ASAHI KASEI KOGYO KK) , 7. November 1995

## Beschreibung

Die Erfindung betrifft eine Kautschukmischung, die zumindest eine Kautschukkomponente, übliche Zusatzstoffe und zumindest einen Füllstoff enthält.

Den Füllstoffen kommt in einer Kautschukmischung wesentliche Bedeutung zu. So tragen sie nicht nur zur Verbilligung von Kautschukmischungen bei, sondern wird ihre spezifische Wirkung auf den Kautschuk ausgenutzt. In der Kautschukbranche unterscheidet man die Füllstoffe nach der Ausgeprägtheit ihrer Wirkung (Aktivität). Die Aktivität eines Füllstoffes ist abhängig von dessen Teilchengröße, deren spezifischer Oberfläche, dessen geometrischer Gestalt und seiner chemischen Zusammensetzung. So bezeichnet man Füllstoffe als aktiv (verstärkende Füllstoffe), bei denen ein Eigenschaftsoptimum in Abhängigkeit ihrer Konzentration verzeichnet wird, so dass diese Kautschukeigenschaft "aktiv" beeinflusst wird. Zu diesen Füllstoffen wird z. B. Ruß oder Kieselsäure gezählt. Im Gegensatz zu den verstärkenden Füllstoffen ist bei den inaktiven (nur über den Volumenanteil verstärkenden) Füllstoffen eine fast durchweg stetige Veränderung des Eigenschaftsbildes mit dem Grad der Füllung zu beobachten. Als inaktiver Füllstoff wird in Kautschukmischungen z. B. Kreide verwendet.

Wie bereits erwähnt ist die Aktivität eines Füllstoffes abhängig von der Teilchengröße, der spezifischen Oberfläche, der geometrischen Form des Teilchens und seiner chemischen Struktur. Die Verstärkungswirkung beruht im wesentlichen auf physikalischen und/oder chemischen Wechselwirkungen an der Grenzfläche zwischen Füllstoff und Kautschukmatrix. So spielen insbesondere die Oberflächeneigenschaften der Füllstoffe eine wesentliche Rolle. Es ist z. B. für Kieselsäure bekannt, deren Oberfläche mit einem Silan zu modifizieren um eine gute Anbindung an die Kautschukmatrix herzustellen und damit die Eigenschaften des Vulkanisates positiv zu beeinflussen. Bekannt sind solche Maßnahmen z. B. für die Herstellung von Laufstreifen für Fahrzeugluftreifen, die dem Fahrzeugluftreifen einen geringen Rollwiderstand und ein gutes Naßrutschverhalten verleiht. Allerdings beruhen solche Wechselwirkungen zwischen Fülllstoff und Kautschukmatrix auf einem einmaligen irreversiblen Ankoppelungsprozess während der Herstellung des Vulkanisats. Ändert sich aber z. B. die Umgebungstemperatur oder der Belastungszustand des Vulkanisates, ist ein Füllstoff, der in herkömmlicher Art an die Matrix gebunden ist, nicht mehr in der Lage, auf diese Einflüsse zu reagieren, um damit z. B. ausreichende dynamisch-mechanische Eigenschaften im Gebrauchszustand des Vulkanisates zu gewährleisten.

Die Aufgabe der vorliegenden Erfindung besteht darin, eine optimale Anbindung zumindest zwischen Füllstoff und Kautschukmatrix herzustellen, so daß es möglich wird, die Eigenschaften des Vulkanisates an veränderliche Umgebungsbedingungen anzupassen.

Gelöst wird diese Aufgabe erfindungsgemäß dadurch, dass die Füllstoffoberfläche mit einer Substanz modifiziert ist, die stimuli-sensitive Eigenschaften aufweist.

Unter dem Begriff stimuli-sensitiv" wird erfindungsgemäß die Fähigkeit eines Systems (Substanz) verstanden, sich an einen dieses System umgebenden veränderlichen Parameter (stimuli) durch eine sprunghafte Änderung einer oder mehrerer Eigenschaften anzupassen (sensitiv). Solche veränderlichen Parameter können z. B. die Temperatur, der pH-Wert, die dynamische Belastung oder aber auch magnetische oder elektrische Feldeinwirkung sein. Aus dem Stand der Technik sind stimuli-sensitive Substanzen bekannt. Solche Verbindungen sind z. B. in
*Hoffmann A. S., Macromol. Symp., 98 (1995), 645-664*
*Ghandi M. V. & Thompson B. S., in Smart Materials and Structures 1 Edn, (Chapman & Hall, London), 1992*
*Kagami Y., Gong J. P. & Osada Y., Macromol. Chem., Rapid Commun. 17 (1996) 539-543*
beschrieben. Es sind aus der *US 5,486,560* auch Substanzen auf der Basis von Thiophenen oder Pyrrolen bekannt, die in Elastomere eingemischt werden können, die dann im Elastomer aufgrund eines veränderten elektrischen Feldes eine Eigenschaftsänderung bewirken. Nach Beendigung der Einwirkung des Stimuli (elektrisches Feld) werden die Ausgangseigenschaften des Elastomeren wieder erreicht. Es konnte aber erfindungsgemäß festgestellt werden, dass durch ein bloßes Einmischen der stimuli-sensitiven Verbindung in ein Kautschuksystem, das aus den Kautschukkomponenten und Zuschlagstoffen wie z. B. Füllstoffe, Vernetzungsagenzien, Weichmacher oder Alterungsschutzmittel besteht, eine verhältnismäßig große Menge an stimuli-sensitiver Verbindung eingemischt werden muß, um eine gezielte Beeinflussung bestimmter Eigenschaften des Elastomers durch ein sie umgebenden veränderlichen Parameter zu erreichen. Erst durch die erfindungsgemäße Einbettung von Füllstoffen, deren Oberfläche mit einer solchen in den zitierten Literaturstellen genannten stimuli-sensitiven Substanz modifiziert ist, ist es möglich, durch gezielte Wechselwirkungen zwischen Füllstoff-Polymer bzw. Füllstoff-Füllstoff definierte reversible Gummieigenschaften zu erreichen, die durch das Anlegen eines äußeren Parameters bewirkt werden. Durch die Einbindung von solch modifizierten Füllstoffen in eine Kautschukmatrix wird mit der Vulkanisation ein Gummiprodukt erreicht, das aufgrund einer Änderung der Umgebungsbedingungen in der Lage ist z. B. seine Gummi- und/oder viskoelastischen Eigenschaften daran anzupassen. Durch diese Anpassungsfähigkeit des Gummiproduktes an bestimmte äußere Bedingungen kann das Anwendungsspektrum z. B. über einen großen Temperatur- und Frequenzintervall verbreitert werden.

Die Herstellung der erfindungsgemäßen Kautschukmischung kann in der Art erfolgen, dass die Füllstoffoberfläche durch Pfropfen mit der stimuli-sensitiven Substanz modifiziert wird und anschließend diese modifizierten Füllstoffe mit weiteren üblichen Zusatzstoffen und Kautschukkomponenten gemischt werden. Dabei ist es möglich den modifizierten Füllstoff allein oder in Kombination mit anderen üblichen Zusatrstoffen (außer den Vernetzungschemikalien) zu den Kautschukkomponenten zugeben und unter einer herkömmlichen Temperaturführung in einem Mischaggregat (z. B. Innenmischer) zu mischen. Nach der Fertigstellung einer solchen Grundmischung und einer eventuellen Lagerung dieser können die restlichen Zusatzstoffe, die Vernetzungsbestandteile (z. B. Vulkanisationsbeschleuniger, Schwefel), hinzugegeben werden. Es ist also nicht erforderlich, den herkömmlichen Mischprozeß zur Herstellung einer Kautschukmischung wesentlich abzuändern.

Als Füllstoffe kommen die in der Kautschukbranche bekannten Substanzen wie z. B. Ruß und/oder Kieselsäure und/oder /oder polymere Mikrogele zum Einsatz. Die Ruße sollen folgende Charakteristika aufweisen: DBP-Zahl (ASTM D 2414) 90 - 200 cm³/100g und einer CTAB-Zahl (ASTM D 3765) von 80 - 170 m²/g. Als Kieselsäuren finden Verbindungen mit einer BET-Oberfläche von 145 - 270 m²/g (ASTM D 5604), einer CTAB - Zahl von 120 - 285 m²/g (ASTM D 3765) und einem Porenvolumen von 0,7 - 1,7 ml/g (DIN 66133) Verwendung. Außerdem können auch mit Kieselsäure modifizierte Ruße, wie sie z. B. in *M.-J. Wang,* *W. J. Patterson, T. A. Bronen: Carbon-Silica Dual Phase Filler, A New Generation Reinforcing Agent For Rubber", Paper No. 25, Rubber Division American Chemical Society, Anaheim, California, May 6-9, 1997* erwähnt sind, zur Anwendung kommen. Bei den polymeren Mikrogelen kann es sich z. B. um Polybutadiengel handeln, was z. B. in der EP 0 575 851 B1 beschrieben ist. Außerdem sind z. B. Polychloroprengele (z. B. EP 0 405 216 B1), Styren-Butadien-Copolymer-Gele oder aber auch Polymethacrylatgele bekannt. Diese genannten Füllstoffe zählen zu den aktiven Füllstoffen, die, wie bereits eingangs erwähnt, die Eigenschaften der Kautschukmischung in Abhängigkeit ihres Füllgrades in einem bestimmten Bereich optimal beeinflussen. Durch die Modifizierung der Oberflächen von aktiven Füllstoffen durch eine stimuli-sensitive Substanz ist es möglich, die Wechselwirkungen zwischen Füllstoff und Polymer (auch zwischen Füllstoff-Füllstoff) genau dann sprunghaft zu verändern, wenn der Parameter angelegt wird bzw. eine bestimmte Grenze überschreitet. Somit können z. B. dynamisch hoch beanspruchte Gummiartikel, wie z. B. Reifenlaufflächen, bereitgestellt werden. Es ist aber auch möglich, z. B. statisch belastete Gummiartikel mit modifizierten inaktiven Füllstoffen zu versehen. Auch eine Kombination aus modifizierten aktiven und modifizierten inaktiven Füllstoffen sowie die Möglichkeit, daß nur eine Füllstoffart modifiziert ist, sind für bestimmte Gummimischungen denkbar.

Für die Herstellung der erfindungsgemäßen Kautschukmischung können weiterhin übliche Zusatzstoffe wie Weichmacher, Vulkanisationsbeschleuniger, Vernetzungsmittel oder Alterungsschutzmittel verwendet werden. Dabei ist es unerheblich, welche Vernetzungschemikalien (z. B. Schwefel oder Peoxide) verwendet werden. Als Kautschukkomponenten können Elastomere auf der Basis von Naturkautschuk, Styrol-Butadien-Copolymer, Acrylnitril-Butadien-Copolymer, Isopren-Butadien-Copolymer, Polybutadien, synthetisches Polyisopren, Isopren-Isobutylen-Copolymer, Ethylen-Propylen-Dien-Terpolymer und Mischungen hieraus eingesetzt werden.

Die Wechselwirkung zwischen Füllstoffoberfläche und der Elastomermatrix kann vorteilhafterweise durch eine stimuli-sensitive Substanz beeinflußt werden, die heterotelechele Eigenschaften aufweist. Das stimuli-sensitive Phasenverhalten zwischen Füllstoffoberfläche und Elastomermatrix wird durch die Aufbringung einer Substanz erreicht, die eine kettenförmige Struktur aufweist, deren Enden unterschiedlich chemisch modifiziert sind (heterotelechel). Als Beispiel seien an dieser Stelle Polysilamine *(Nagasaki Y., Kataoka K., Trends in Polym. Sci., 4 (1996) 59-64)* genannt. Insbesondere heterotelechele Polysilamine sind aufgrund einer Änderung des pH-Wertes und/oder der Temperatur in der Lage, sich auszurichten und können somit die Wechselwirkung zwischen Füllstoff und Polymer beeinflussen. Daher kommen sie bevorzugt zur Anwendung, da insbesondere die Temperatur bei dynamisch belasteten Gummiartikeln einen wesentlichen Einfluss auf die gummielastischen Eigenschaften des Produktes hat. Als bevorzugtes Beispiel eines Polysilamins sei eine Substanz mit folgender Struktur genannt: 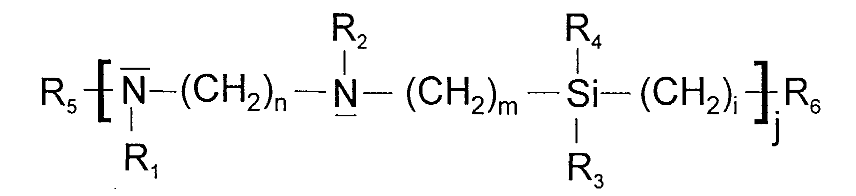 wobei:
1) R₁, R₂, R₃, R₄, R₅, R₆ ausgewählt ist aus: -H, -Alkyl (verzweigt oder unverzweigt), -Alkenyl (verzweigt oder unverzweigt), -Acyl, -Silyl, -NH₂, -SH, -OH, -COOH, -COH, -NOH, -CN, -NC und R₅ ≠ R₆ ist und
2) n, m, i zwischen 0 und 5 und
3) j > 2 liegt.

Unter dem Alkylrest und Alkenylrest sollen Kohlenstoffketten (verzweigt oder unverzweigt) mit 1 bis 12, vorzugsweise 1 bis 6, Kohlenstoffatomen verstanden werden, wobei der Alkenylrest zumindest eine Doppelbindung aufweisen muß. Der Alkyl- und Alkenylrest kann eine cyklische Struktur besitzen, wobei unter dem Begriff "Alkenyl" auch aromatische Systeme fallen. Diese aromatischen Systeme können für den Fachmann übliche Substituenten wie z. B. -NH₂, -NO₂, -OCH₃, -SH, -OH, -COOH, -COH, -Alkyl (wie bereits definiert) oder auch ungesättigte Substiuenten (z.B. -Vinyl) aufweisen. n, m, i weisen einen Wert zwischen 0 und 5, bevorzugt zwischen 2 und 4 auf. Da durch die Größe von j der Begriff "Polymer" bestimmt wird, soll j anmeldungsgemäß mindestens 2 sein und einen größten Wert annehmen können, der dem Fachmann üblich ist. So sind Werte für j bis 10¹⁰ und durchaus auch größer bekannt.

Als besondere Ausführungsform gilt die heterotelechele stimuli-sensitive Substanz folgender Struktur: 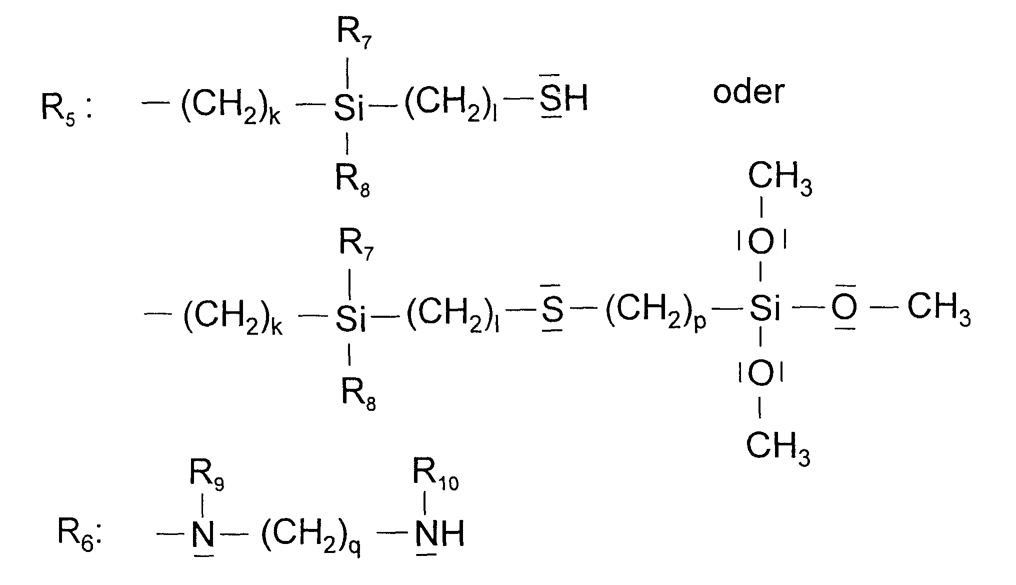 wobei
1) R₇, R₈, R₉, R₁₀ ausgewählt ist aus:
   -H, -Alkyl (verzweigt oder unverzweigt), -Alkenyl (verzweigt oder unverzweigt) -Acyl, -Silyl, -NH₂, -SH, -OH, -COOH, -COH, -NOH, -CN, -NC und
2) k, l, p, q zwischen 0 und 5 liegt.

Unter dem Alkylrest und Alkenylrest sollen Kohlenstoffketten (verzweigt oder unverzweigt) mit 1 bis 12, vorzugsweise 1 bis 6, Kohlenstoffatomen verstanden werden, wobei der Alkenylrest zumindest eine Doppelbindung aufweisen muß. Der Alkyl- und Alkenylrest kann eine cyklische Struktur besitzen, wobei unter dem Begriff Alkenyl" auch aromatische Systeme fallen. Diese aromatischen Systeme können für den Fachmann übliche Substituenten wie z. B. -NH₂, -NO₂, -OCH₃, -SH, -OH, -COOH, -COH, -Alkyl (wie bereits definiert) oder auch ungesättigte Substiuenten (z.B. -Vinyl) aufweisen. Die Größe von k, l, p, q beträgt zwischen 0 und 5, vorzugsweise zwischen 2 und 4.

Es ist aber nicht nur möglich, die Füllstoffoberfläche mit einer stimuli-sensitiven Substanz zu versehen, sondern es kann auch die Oberfläche des Füllstoffs in der Art modifiziert werden, dass sie mit der ihr unmittelbar umgebenden Gummimatrix zumindest im vulkanisierten Zustand eine stimuli-sensitive Gummimischung bildet. Dabei ist es möglich die Füllstoffoberfläche mit Substanzen zu modifizieren, die aufgrund ihrer Eigenschaften in der Lage sind, bei einem sich ändernden Parameter sprunghaft die Wechselwirkung zwischen Füllstoff und Gummimatrix zu beeinflussen.

Eine Möglichkeit, die Oberfläche des Füllstoffs so zu modifizieren, dass diese mit der ihr umgebenden Gummimatrix stimuli-sensitive Charakteristika aufweist, besteht darin, dass bei der Herstellung der Gummimischung zumindest zwei Kautschuke verwendet worden sind, wobei die Oberfläche des Füllstoffs mit einem ersten Kautschuk modifiziert ist, so dass sich zwischen diesem auf der Füllstoffoberfläche befindlichen ersten Kautschuk und dem angrenzenden zweiten Kautschuk der Gummimatrix zumindest im vulkanisierten Zustand eine stimuli-sensitive Kautschukmischung bildet. Diese Ausführungsform hat den Vorteil, dass auf eine Auswahl an stimuli-sensitiven Substanzen verzichtet werden kann, da die Kautschukkomponenten für die Herstellung des Gummiproduktes sowieso zur Verfügung stehen. Dabei ist es möglich, daß die Gummimatrix aus einer Mischung aus verschiedenen Kautschukkomponenten hergestellt worden ist, wobei zumindest eine davon mit der auf dem Füllstoff befindlichen vulkanisierten Kautschukkomponente eine stimuli-sensitive Beziehung eingeht.

Die Herstellung eines solchen modifizierten Füllstoffpartikels kann in der Art erfolgen, dass die Füllstoffoberfläche mit einem Kautschuk gepfropft wird und anschließend dieser modifizierte Füllstoff mit weiteren Kautschukkomponenten und weiteren üblichen Zusatzstoffen gemischt werden. Die Zugabe der einzelnen Stoffe kann wie bereits erwähnt in verschiedener Reihenfolge erfolgen, so daß auch dieser Mischprozeß auf herkömmliche Art und Weise erfolgt. Nach der Konfektionierung des entsprechenden Rohlings wird dieser vulkanisiert.

Es ist wiederum möglich, sowohl aktive Füllstoffe mit den bereits genannten Eigenschaften wie z. B. Ruß und/oder Kieselsäure und/oder kieselsäuremodifizierte Ruße und/oder polymere Mikrogele als auch inaktive Füllstoffe so zu modifizieren, dass diese mit der sie unmittelbar umgebenden Gummimatrix eine stimuli-sensitive Gummimischung bildet. Dabei können sich in einer Gummimischung mehrerer Füllstoffarten (aktive und/oder inaktive) befinden, wovon zumindest eine modifiziert ist.

Für die Herstellung der erfindungsgemäßen Kautschukmischung können weiterhin übliche Zusatzstoffe wie Weichmacher, Vulkanisationsbeschleuniger, Vernetzungsmittel oder Alterungsschutzmittel verwendet werden. Dabei ist es unerheblich welche Vernetzungschemikalien (z. B. Schwefel oder Peoxide) verwendet werden. Als Kautschukkomponenten können Elastomere auf der Basis von Naturkautschuk, Styrol-Butadien-Copolymer, Acrylnitril-Butadien-Copolymer, Isopren-Butadien-Copolymer, Polybutadien, synthetisches Polyisopren, Isopren-Isobutylen-Copolymer, Ethylen-Propylen-Dien-Terpolymer und Mischungen hieraus eingesetzt werden.

Als bevorzugt hat sich gezeigt, wenn die Gummimatrix zumindest Polyisopren enthält und wenn die Füllstoffoberfläche mit Polybutadien modifiziert worden ist. Die Wechselwirkungen zwischen dem auf den Füllstoff gepfropften Polybutadien und dem in der Gummimatrix befindlichen Polyisopren werden durch Temperaturerhöhung in der Art beeinflußt, daß an der Grenzfläche zwischen dem Polybutadien und dem Polyisopren eine Entmischung auftritt. Diese sprunghafte Phasentrennung wirkt sich unmittelbar auf die Eigenschaften z. B. auf die Elastizität des Gummimaterials aus, da eine ausreichende Anbindung des Füllstoffs an die Gummimatrix nicht mehr gegeben ist. Es ist natürlich auch möglich, daß die Füllstoffoberfläche mit Polyisopren beladen ist und die sie umgebende Gummimatrix zumindest Polybutadien enthält.

Durch die Erzeugung von stimuli-sensitiven Phasen zwischen Füllstoff und Polymer bzw. Füllstoff und Füllstoff in einer Gummimatrix wird es möglich, die Eigenschaften des Gummis so zu optimieren, dass diese unter gewählten Einsatzbedingungen (z. B. Temperatur, Belastungszustand, usw.) definierte Eigenschaften aufweisen können. Durch die Anbindung des Füllstoffs an die Polymermatrix über stimuli-sensitives Phasenverhalten bzw. Substanzen wird es möglich, die Wirkung der Füllstoffe gezielt zu beeinflussen. Es werden Gummiprodukte erfindungsgemäß hergestellt, die
z. B. für die Herstellung von Fahrzeugreifen (z. B. Reifenlaufflächen) verwendet werden können. Gerade in diesem Bereich, wo die Temperaturabhängigkeit, bzw. die dynamische Belastbarkeit des Artikels ausschlaggebend für die Haltbarkeit des Artikels ist, kommt die Erfindung besonders zum Tragen. Prinzipiell können aber auch andere technische Gummiprodukte wie z. B. Dichtungen, Luftfedern oder aber auch Schläuche erfindungsgemäß modifiziert werden.

Die Erfindung soll anhand eines Ausführungsbeispiels näher erläutert werden.

Dabei zeigt:
- Fig. 1:: ein schematisches Prinzip der Ankopplung eines heterotelecheles stimuli-sensitives Polymer an die Füllstoffoberfläche
- Fig. 2:: ein schematisches Prinzip zur Herstellung der Anbindung eines Füllstoffs an eine Gummimatrix, so dass der Füllstoff mit der ihm unmittelbar umgebenden Gummimatrix eine stimuli-sensitive Gummimischung bildet.

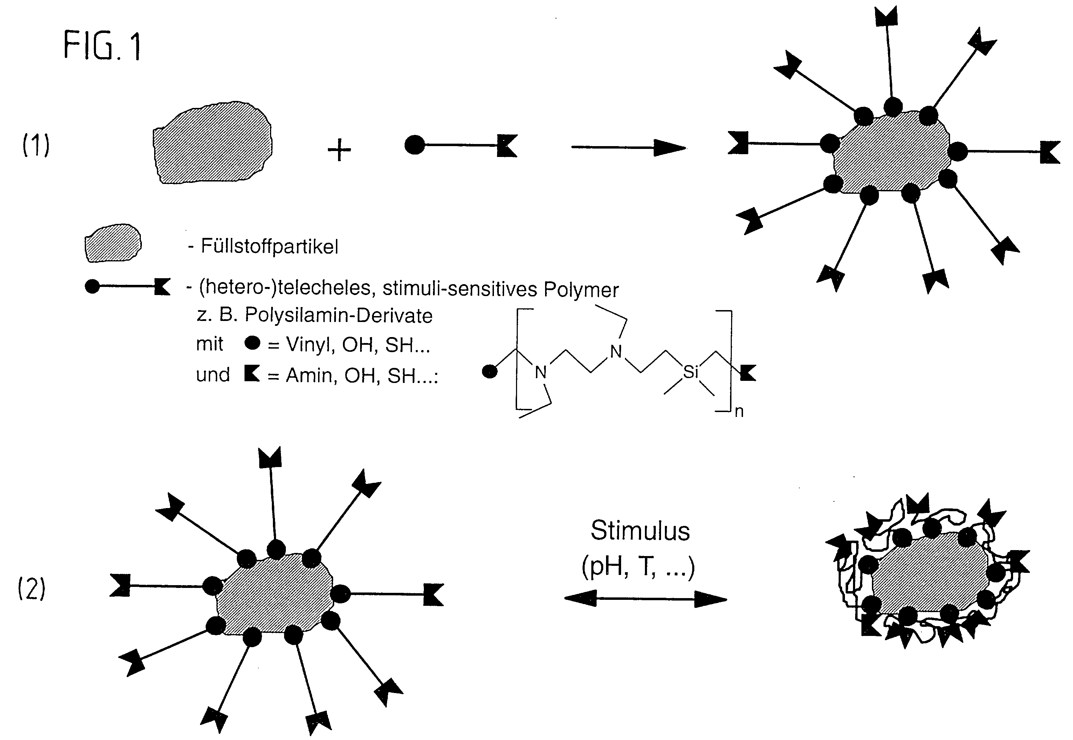

Die Füllstoffpartikeloberfläche (z. B. Ruß) wird mit einem Polysilaminderivat der angegebenen Form in der Art gepfropft, dass möglichst ein großer Teil der Oberfläche modifiziert ist (Figur 1 (1)). Die Füllstoffpartikel können z. B. in einem Rührgefäß mit dem Polysilaminderivat in Kontakt gebracht werden. Eine so modifizierter Füllstoff wird in eine nicht dargestellte Kautschukmischung auf herkömmliche Art und Weise eingemischt und dem üblichen Mischprozess unterworfen. Nach Formung des entsprechenden Rohlings wie z. B. Laufstreifenrohling, kann dieser für die Herstellung eines Fahrzeugluftreifens zur Konfektionierung genutzt werden. Nach der Vulkanisation bei üblichen Bedingungen wird ein Fahrzeugluftreifen erzielt, dessen Laufstreifen auf eine Temperatur- oder pH-Wert-Veränderung in der Art reagiert, dass durch Ausrichtung des Polysilamins (Figur 1 (2)) die Wechselwirkung zwischen Gummimatrix-Füllstoff und/oder Füllstoff-Füllstoff beeinflußt wird, wodurch eine Glastemperaturänderung der Polymermatrix bewirkt wird, die die viskoelastischen Eigenschaften des Gummiartikels mitbestimmt.

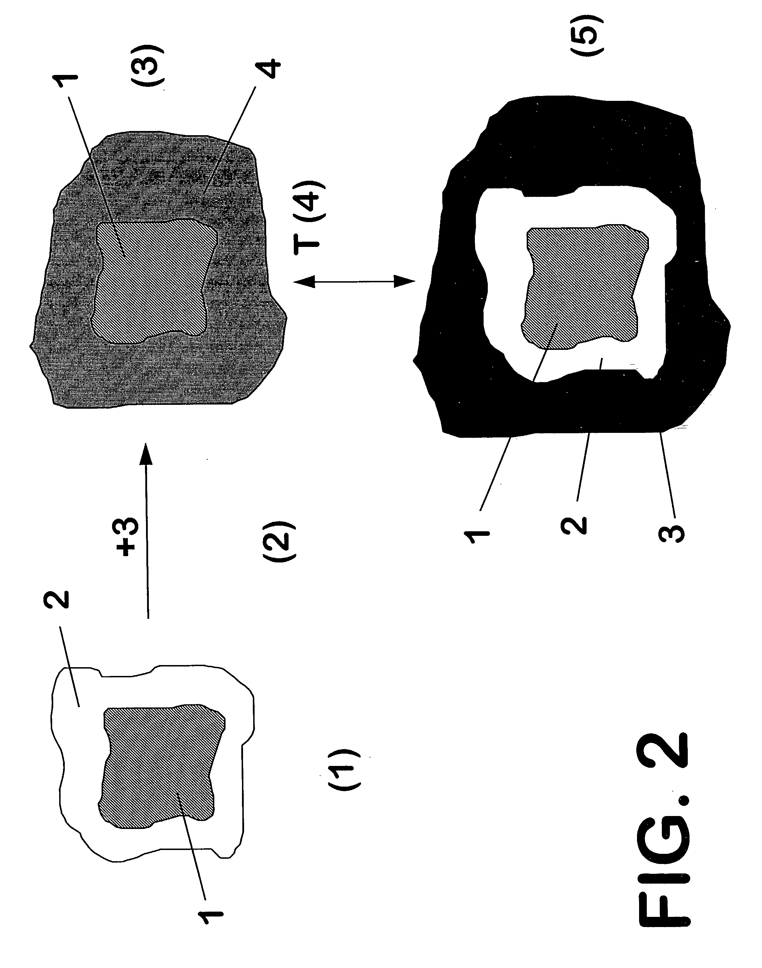

In der Figur 2 ist dargestellt, dass die Oberfläche des Füllstoffs 1 (z. B. Ruß) mit einem Polyisopren-Kautschuk (IR) 2 gepropft ist (Figur 2 (1)). Die Einmischung dieses modifizierten Füllstoffes erfolgt wiederum in herkömmlicher Art und Weise. Die Kautschukmischung enthält als Komponente zumindest Polybutadien (BR) 3 (Figur 2 (2)), jedoch weist diese vorteilhafter Weise auch Naturkautschuk (NR) und/oder Styrol-Butadien-Copolymer (SBR) auf, da sich insbesondere solche Verschnitte z.B. für die Herstellung von Laufstreifen von Fahrzeugreifen als günstig erwiesen haben. Der Mischprozess erfolgt wiederum in einem üblichen Prozessablauf und der Gummiartikelrohling, z. B. Laufstreifenrohling, wird zur Konfektionierung von Fahrzeugluftreifen aufgebracht. Nach der Vulkanisation des Reifens wird ein Fahrzeugluftreifen erzielt, der einen Laufstreifen aufweist, der seine Eigenschaften verschiedenen Bedingungen (wie z. B. Temperatur), die aufgrund der Umgebung oder aber auch des Belastungszustandes variieren, anpassen kann. Das geschieht in der Art und Weise, dass das Polyisopren 2, was die Füllstoffoberfläche bedeckt, mit dem Polybutadien 3, das sich in der Gummimimatrix befindet, eine homogene Phase 4 (Figur 2 (3)) bildet, bei einer Temperaturerhöhung jedoch eine Entmischung (Figur 2 (5)) in eine Polyisoprenphase 2 und in eine Polybutadienphase 3 auftritt, wodurch die Wechselwirkungen zwischen Füllstoff und Gummimatrix sprunghaft vermindert werden. Diese Beeinflussung der Wechselwirkungen bewirkt im Gummiprodukt eine Verringerung der Elastizität des Gummis.

Diese Mischungs-/Entmischungsvorgänge sind in Abhängigkeit der Temperatur reversibel (Figur 2 (4)).

## Patentansprüche

1. Kautschukmischung, die zumindest eine Kautschukkomponente, übliche Zusatzstoffe und zumindest einen Füllstoff enthält,
**dadurch gekennzeichnet,**
daß die Füllstoffoberfläche mit einer Substanz modifiziert ist, die *sich an einen umgebenden veränderlichen Parameter (stimuli) durch eine sprunghafte Änderung einer oder mehrerer Eigenschaften anpaßt (sensitiv)*.

2. Kautschukmischung nach Anspruch 1, dadurch gekennzeichnet, daß die Substanz heterotelechele Eigenschaften aufweist.

3. Kautschukmischung nach Anspruch 2, dadurch gekennzeichnet, daß die Substanz ein Polysilamin ist.

4. Kautschukmischung nach Anspruch 3, dadurch gekennzeichnet, daß das Polysilamin folgende Struktur aufweist: 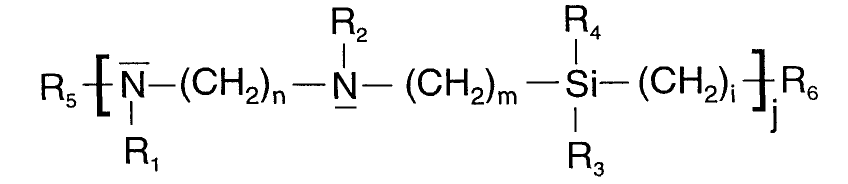 wobei:
1) R₁, R₂, R₃, R₄, R₅, R₆ ausgewählt ist aus:
-H, -Alkyl (verzweigt oder unverzweigt), -Alkenyl (verzweigt oder unverzweigt), -Acyl, -Silyl, -NH₂, -SH, -OH, -COOH, -COH, -NOH, -CN, -NC und R₅ ≠ R₆ ist und
2) n, m, i zwischen 0 und 5 und
3) j > 2 liegt.

5. Kautschukmischung nach Anspruch 4, dadurch gekennzeichnet, daß 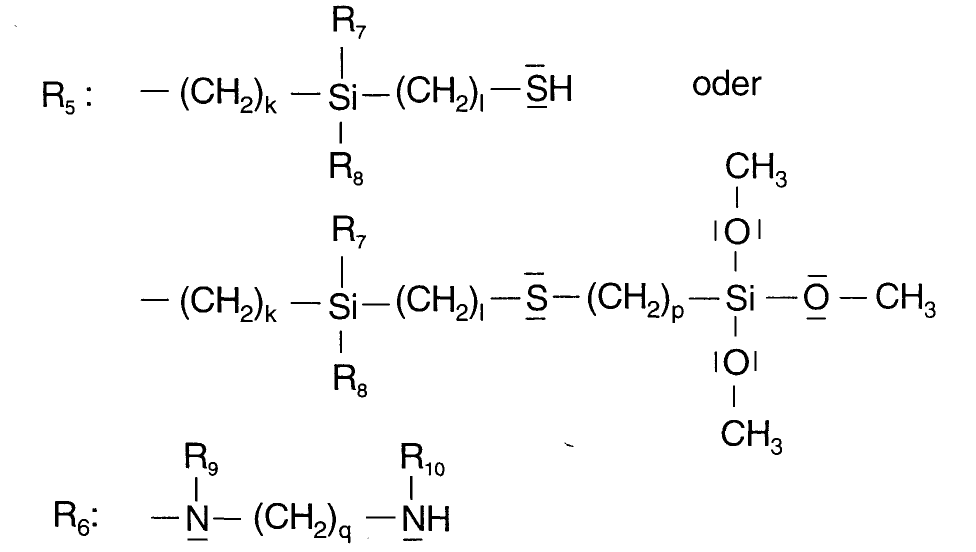 wobei
1) R₇, R₈, R₉, R₁₀ ausgewählt ist aus:
-H, -Alkyl (verzweigt oder unverzweigt), -Alkenyl (verzweigt oder unverzweigt) -Acyl, -Silyl, -NH₂, -SH, -OH, -COOH, -COH, -NOH, -CN, -NC und
2) k, l, p, q zwischen 0 und 5 liegt.

6. Kautschukmischung nach zumindest einem der vorhergehenden Ansprüche, dadurch gekennzeichnet, daß mit der Substanz die Oberfläche aktiver Füllstoffe modifiziert ist.

7. Kautschukmischung nach Anspruch 6, dadurch gekennzeichnet, daß der Füllstoff Ruß und/oder Kieselsäure und/oder kieselsäuremodifizierter Ruß und/oder polymere Mikrogele ist.

8. Kautschukmischung nach zumindest einem der vorhergehenden Ansprüche, dadurch gekennzeichnet, daß mit der Substanz die Oberfläche inaktiver Füllstoffe modifiziert ist.

9. Kautschukmischung nach zumindest einem der vorhergehenden Ansprüche, dadurch gekennzeichnet, daß der Kautschuk ausgewählt ist aus Naturkautschuk, Styrol-Butadien-Copolymer, Acrylnitril-Butadien-Copolymer, Isopren-Butadien-Copolymer, Polybutadien, synthetisches Polyisopren, Isopren-lsobutylen-Copolymer, Ethylen-Propylen-Dien-Terpolymer und Mischungen hieraus.

10. Füllstoff für Kautschukmischungen, dadurch gekennzeichnet, daß dessen Oberfläche mit einer Substanz modifiziert ist, die *sich an einen umgebenden veränderlichen Parameter (stimuli) durch eine sprunghafte Änderung einer oder mehrerer Eigenschaften anpaßt (sensitiv).*

11. Verfahren zur Herstellung einer Kautschukmischung nach zumindest einem der vorhergehenden Ansprüche, folgende Schritte enthaltend:
a) Pfropfen der Füllstoffoberfläche mit einer Substanz, *die sich an einen umgebenden veränderlichen Parameter (stimuli) durch eine sprunghafte Änderung einer* oder *mehrerer Eigenschaften anpaßt (sensitiv),* und anschließend
b) Mischen des unter a) modifizierten Füllstoffs mit Kautschukkomponenten und weiteren üblichen Zusatzstoffen.

12. Verwendung der Kautschukmischung nach zumindest einem der vorhergehenden Ansprüche zur Herstellung von Gummiprodukten.

13. Gummimischung, bei deren Herstellung mindestens eine Kautschukkomponente, übliche Zusatzstoffe und zumindest einen Füllstoff verwendet worden ist, **dadurch gekennzeichnet**, daß die Oberfläche des Füllstoffs in der Art modifiziert ist, daß sie zumindest im vulkanisierten Zustand mit der ihr unmittelbar umgebenden Gummimatrix *eine Gummimischung bildet, die in der Lage ist, sich an einen umgebenden veränderlichen Parameter (stimuli) durch eine sprunghafte Änderung einer oder mehrerer Eigenschaften anzupassen (sensitiv).*

14. Gummimischung nach Anspruch 13, dadurch gekennzeichnet, daß bei deren Herstellung zumindest zwei Kautschuke verwendet worden sind, wobei die Oberfläche des Füllstoffs mit dem ersten Kautschuk modifiziert ist, so daß sich zwischen diesem auf der Füllstoffoberfläche befindlichen ersten und dem angrenzenden zweiten Kautschuk der Gummimatrix zumindest im vulkanisierten Zustand *eine Gummimischung bildet, die in der Lage ist, sich an einen umgebenden veränderlichen Parameter (stimuli) durch eine sprunghafte Änderung einer oder mehrerer Eigenschaften anzupassen (sensitiv).*

15. Gummimischung nach Anspruch 13 und/oder 14, dadurch gekennzeichnet, daß der Kautschuk ausgewählt ist aus Naturkautschuk, Styrol-Butadien-Copolymer, Acrylnitril-Butadien-Copolymer, Isopren-Butadien-Copolymer, Polybutadien, synthetisches Polyisopren, Isopren-lsobutylen-Copolymer, Ethylen-Propylen-Dien-Terpolymer und Mischungen hieraus.

16. Gummimischung nach Anspruch 15, dadurch gekennzeichnet, daß die Kautschukmischung zumindest Polyisopren und Polybutadien enthält.

17. Gummimischung nach zumindest einem der vorhergehenden Ansprüche 13 - 16, dadurch gekennzeichnet, daß der Füllstoff ein aktiver Füllstoff ist.

18. Gummimischung nach Anspruch 17, dadurch gekennzeichnet, daß der Füllstoff Ruß und/oder Kieselsäure und/oder Kieselsäure gepfropfter Ruß und/oder polymere Mikrogele ist.

19. Gummimischung nach zumindest einem der Ansprüche 13 - 16, dadurch gekennzeichnet, daß der Füllstoff ein inaktiver Füllstoff ist.

20. Verfahren zur Herstellung einer Gummimischung nach zumindest einem der Ansprüche 13 - 19, folgende Schritte enthaltend:
a) Pfropfen der Füllstoffoberfläche mit einem Kautschuk und anschließend
b) Mischung des unter a) modifizierten Füllstoffs mit zumindest einer Kautschukkomponente und weiteren üblichen Zusatzstoffen und
c) Vulkanisieren der Kautschukmischung.

21. Verwendung der Gummimischung nach zumindest einem der Ansprüche 13 - 19 zur Herstellung von Gummiprodukten.

## Claims

1. Rubber mixture, which contains at least one rubber component, conventional additives and at least one filler, characterised in that the filler surface is modified with a substance which is adapted to an ambient variable parameter (stimuli) by a sudden change in one or more properties (sensitive).

2. Rubber mixture according to claim 1, characterised in that the substance has heterotelechel properties.

3. Rubber mixture according to claim 2, characterised in that the substance is a polysilamine.

4. Rubber mixture according to claim 3, characterised in that the polysilamine has the following structure: 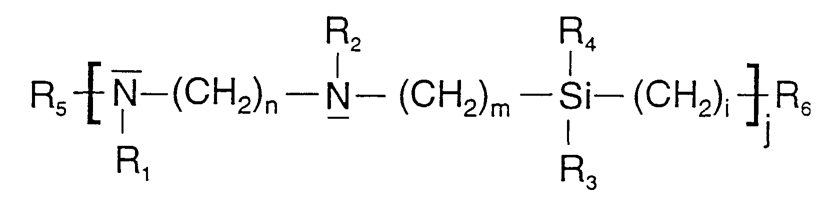 wherein:
1) R₁, R₂, R₃, R₄, R₅ and R₆ are selected from:
-H, -alkyl (branched or unbranched), -alkenyl (branched or unbranched), -acyl, -silyl, -NH₂, -SH,-OH, -COOH, -COH, -NOH, -CN, -NC and R5 = R6, and
2) n, m and i lie between 0 and 5, and
3) j is > 2.

5. Rubber mixture according to claim 4, characterised in that 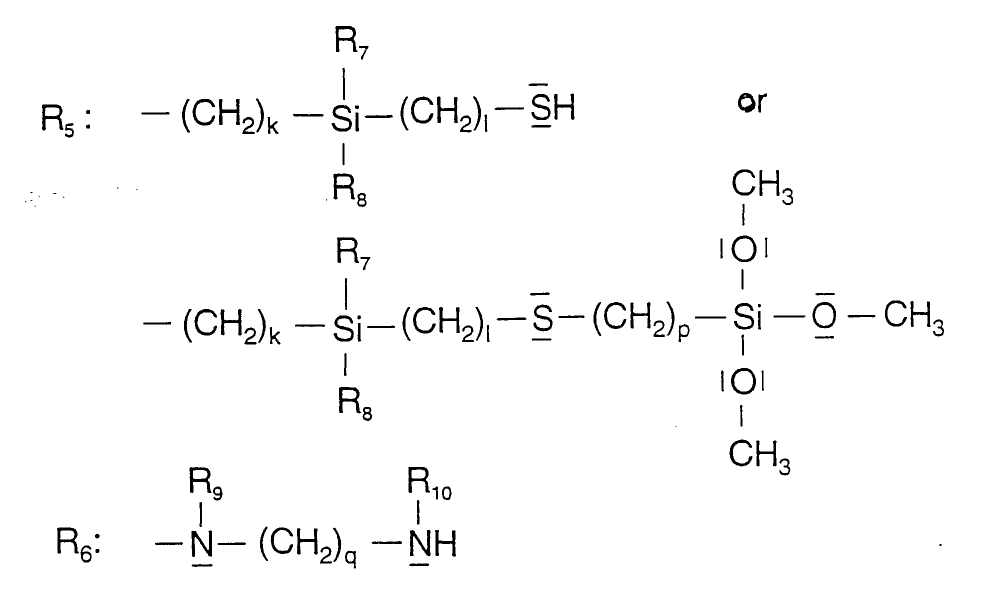 wherein:
1) R₇, R₈, R₉ and R₁₀ are selected from:
-H, -alkyl (branched or unbranched), -alkenyl (branched or unbranched), -acyl, -silyl, -NH₂, -SH, -OH, -COOH,-COH, -NOH, -CN, -NC, and
2) k, l, p and q lie between 0 and 5.

6. Rubber mixture according to at least one of the preceding claims, characterised in that the surface of active fillers is modified with the substance.

7. Rubber mixture according to Claim 6, characterised in that the filler is carbon black and/or silica and/or silica-modified carbon black and/or polymeric microgels.

8. Rubber mixture according to at least one of the preceding claims, characterised in that the surface of inactive fillers is modified with the substance.

9. Rubber mixture according to at least one of the preceding claims, characterised in that the rubber is selected from natural rubber, styrene-butadiene copolymer, acrylonitrile-butadiene copolymer, isoprene-butadiene copolymer, polybutadiene, synthetic polyisoprene, isoprene-isobutylene copolymer, ethylene-propylene-diene terpolymer and mixtures thereof.

10. Filler for rubber mixtures, characterised in that the surface of said filler is modified with a substance which is adapted to an ambient variable parameter (stimuli) by a sudden change in one or more properties (sensitive).

11. Method of producing a rubber mixture according to at least one of the preceding claims, containing the following steps:
a) grafting the filler surface with a substance which is is adapted to an ambient variable parameter (stimuli) by a sudden change in one or more properties (sensitive), and subsequently
b) mixing the filler, modified under a), with rubber components and additional conventional additives.

12. Use of the rubber mixture according to at least one of the preceding claims for producing rubber products.

13. Rubber mixture, for the production of which at least one rubber component, conventional additives and at least one filler have been used, characterised in that the surface of the filler is modified in such a manner that it forms a rubber mixture, at least in the vulcanised state with the rubber matrix surrounding it directly, which rubber mixture is capable of being adapted to an ambient variable parameter (stimuli) by a sudden change in one or more properties (sensitive).

14. Rubber mixture according to claim 13, characterised in that, for the production of said mixture, at least two rubbers have been used, the surface of the filler being modified with the first rubber so that a rubber mixture is formed between this first rubber, situated on the filler surface, and the adjacent second rubber of the rubber matrix, at least in the vulcanised state, which rubber mixture is capable of being adapted to an ambient variable parameter (stimuli) by a sudden change in one or more properties (sensitive).

15. Rubber mixture according to claim 13 and/or 14, characterised in that the rubber is selected from natural rubber, styrene-butadiene copolymer, acrylonitrile-butadiene copolymer, isoprene-butadiene copolymer, polybutadiene, synthetic polyisoprene, isoprene-isobutylene copolymer, ethylene-propylene-diene terpolymer and mixtures thereof.

16. Rubber mixture according to claim 15, characterised in that the rubber mixture contains at least polyisoprene and polybutadiene.

17. Rubber mixture according to at least one of the preceding claims 13 - 16, characterised in that the filler is an active filler.

18. Rubber mixture according to claim 17, characterised in that the filler is carbon black and/or silica and/or silica-grafted carbon black and/or polymeric microgels.

19. Rubber mixture according to at least one of claims 13-16, characterised in that the filler is an inactive filler.

20. Method of producing a rubber mixture according to at least one of claims 13 - 19, containing the following steps:
a) grafting the filler surface with a rubber, and subsequently
b) mixing the filler, modified under a), with at least one rubber component and additional conventional additives, and
c) vulcanising the rubber mixture.

21. Use of the rubber mixture according to at least one of claims 13 - 19 for producing rubber products.

## Revendications

1. Composition de caoutchouc qui comporte au moins un composant de caoutchouc, des additifs habituels et au moins une charge,
caractérisée en ce que
la surface de la charge est modifiée avec une substance qui s'adapte à un paramètre ambiant variable (stimuli) par une modification discontinue d'une ou plusieurs propriétés (sensitif).

2. Composition de caoutchouc selon la revendication 1, caractérisée en ce que la substance présente des propriétés hétérotéléchéliques.

3. Composition de caoutchouc selon la revendication 2, caractérisée en ce que la substance est une polysilamine.

4. Composition de caoutchouc selon la revendication 3, caractérisée en ce que la polysilamine a la structure suivante : 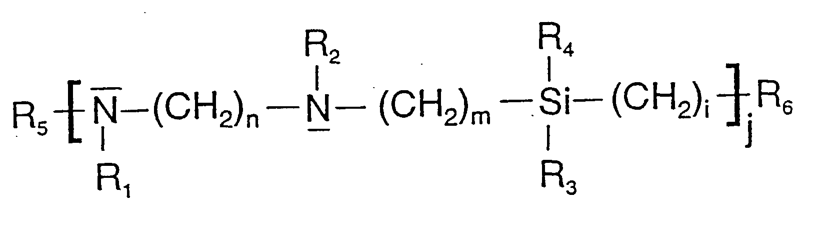 où :
1) R₁, R₂, R₃, R₄, R₅, R₆ sont choisis parmi :
-H, -alkyle (ramifié ou non ramifié), -alcényle (ramifié ou non ramifié), -acyle, -silyle, -NH₂, -SH, -OH, -COOH, -COH, -NOH, -CN, -NC et R₅ est ≠ R₆, et
2) n, m, i sont entre 0 et 5, et
3) j est > 2.

5. Composition de caoutchouc selon la revendication 4, caractérisée en ce que 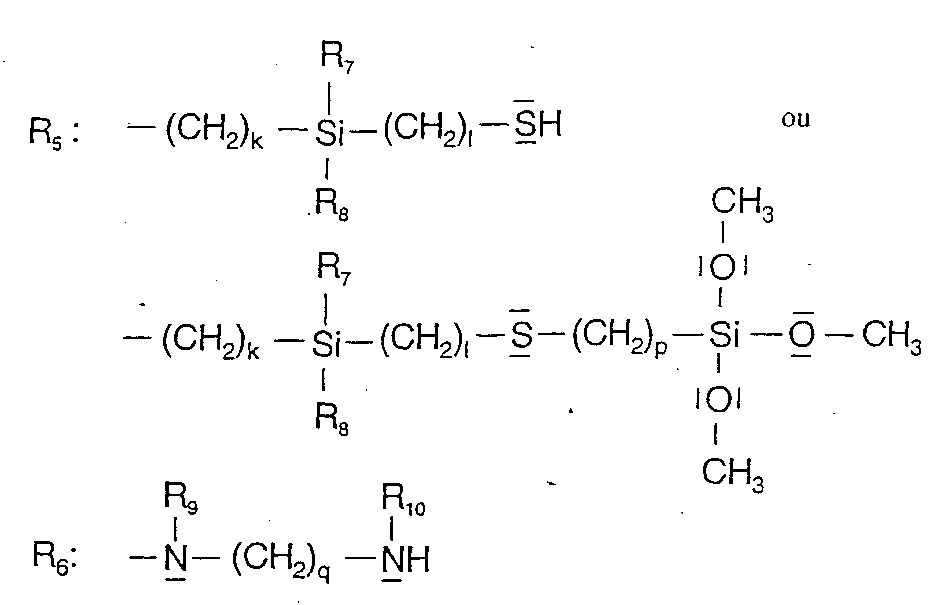 où :
1) R₇, R₈, R₉, R₁₀ sont choisis parmi :
-H, -alkyle (ramifié ou non ramifié), -alcényle (ramifié ou non ramifié), -acyle, -silyle, -NH₂, -SH, -OH, -COOH, -COH, -NOH, -CN, -NC, et
2) k, l, p, q sont entre 0 et 5.

6. Composition de caoutchouc selon au moins une des revendications précédentes, caractérisée en ce que la surface de charges actives est modifiée avec la substance.

7. Composition de caoutchouc selon la revendication 6, caractérisée en ce que la charge est du noir de carbone et/ou de l'acide silicique et/ou du noir de carbone modifié avec de l'acide silicique et/ou des microgels polymères.

8. Composition de caoutchouc selon au moins une des revendications précédentes, caractérisée en ce que la surface de charges inactives est modifiée avec la substance.

9. Composition de caoutchouc selon au moins une des revendications précédentes, caractérisée en ce que le caoutchouc est choisi parmi le caoutchouc naturel, un copolymère styrène-butadiène, un copolymère acrylonitrile-butadiène, un copolymère isoprène-butadiène, le polybutadiène, le polyisoprène synthétique, un copolymère isoprène-isobutylène, un terpolymère éthylène-propylène-diéne et les mélanges de ceux-ci.

10. Charge pour des compositions de caoutchoucs, caractérisée en ce que sa surface est modifiée avec une substance qui s'adapte à un paramètre ambiant variable (stimuli) par une modification discontinue d'une ou plusieurs propriétés (sensitif).

11. Procédé pour la préparation d'une composition de caoutchouc selon au moins une des revendications précédentes, qui comporte les étapes suivantes :
a) le greffage de la surface de la charge avec une substance qui s'adapte à un paramètre ambiant variable (stimuli) par une modification discontinue d'une ou plusieurs propriétés (sensitif), et ensuite
b) le mélange de la charge modifiée sous a) avec des composants de caoutchoucs et d'autres additifs habituels.

12. Utilisation de la composition de caoutchouc selon au moins une des revendications précédentes pour la préparation de produits de gommes.

13. Composition de gomme, pour la préparation de laquelle on a utilisé au moins un composant de caoutchouc, des additifs habituels et au moins une charge, caractérisée en ce que la surface de la charge est modifiée de telle sorte que, au moins à l'état vulcanisé, elle forme avec la matrice de gomme qui est dans son entourage immédiat une composition de gomme qui est en mesure de s'adapter à un paramètre ambiant variable (stimuli) par une modification discontinue d'une ou plusieurs propriétés (sensitif).

14. Composition de gomme selon la revendication 13, caractérisée en ce que, lors de sa préparation, on a utilisé au moins deux caoutchoucs, la surface de la charge étant modifiée avec le premier caoutchouc de telle sorte que, entre ce premier caoutchouc qui se trouve à la surface de la charge, et le deuxième caoutchouc ambiant de la matrice de gomme, il se forme, au moins à l'état vulcanisé, une composition de gomme qui est en mesure de s'adapter à un paramètre ambiant variable (stimuli) par une modification discontinue d'une ou plusieurs propriétés (sensitif).

15. Composition de gomme selon la revendication 13 et/ou 14 caractérisée en ce que le caoutchouc est choisi parmi le caoutchouc naturel, un copolymère styrène-butadiène, un copolymère acrylonitrile-butadiène, un copolymère isoprène-butadiène, le polybutadiène, le polyisoprène synthétique, un copolymère isoprène-isobutylène, un terpolymère éthylène-propylène-diène et les mélanges de ceux-ci.

16. Composition de gomme selon la revendication 15, caractérisée en ce que la composition de caoutchouc comporte au moins du polyisoprène et du polybutadiène.

17. Composition de gomme selon au moins une des revendications précédentes 13 à 16, caractérisée en ce que la charge est une charge active.

18. Composition de gomme selon la revendication 17, caractérisée en ce que la charge est du noir de carbone et/ou de l'acide silicique et/ou du noir de carbone greffé avec de l'acide silicique et/ou des microgels de polymères.

19. Composition de gomme selon au moins une des revendications 13 à 16, caractérisée en ce que la charge est une charge inactive.

20. Procédé pour la préparation d'une composition de gomme selon au moins une des revendications 13 à 19, comportant les étapes suivantes :
a) le greffage de la surface de la charge avec un caoutchouc et ensuite
b) le mélange de la charge modifiée sous a) avec au moins un composant de caoutchouc et d'autres additifs habituels, et
c) la vulcanisation de la composition de caoutchouc.

21. Utilisation de la composition de gomme selon au moins une des revendications 13 à 19 pour la préparation de produits de gommes.
